(19) **Europäisches Patentamt**
**European Patent Office**
**Office européen des brevets**

(11) **EP 3 038 046 A1**

(12) **EUROPEAN PATENT APPLICATION**

(43) Date of publication:
**29.06.2016 Bulletin 2016/26**

(51) Int Cl.:
***G06Q 40/04*** *(2012.01)*

(21) Application number: **15202090.5**

(22) Date of filing: **22.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.12.2014 US 201462096244 P**
**29.05.2015 US 201514726353**

(71) Applicant: **Palantir Technologies, Inc.**
**Palo Alto, California 94301 (US)**

(72) Inventors:
• **Hunter, Sean**
**Palo Alto, CA California 94301 (US)**
• **Rogerson, Samuel**
**Palo Alto, CA California 94301 (US)**
• **Mukherjee, Anirvan**
**Palo Alto, CA California 94301 (US)**

(74) Representative: **Dendorfer, Claus**
**Dendorfer & Herrmann**
**Patentanwälte Partnerschaft mbB**
**Bayerstrasse 3**
**80335 München (DE)**

(54) **SYSTEM AND METHODS FOR DETECTING FRAUDULENT TRANSACTIONS**

(57)     A computer system implements a risk model for detecting outliers in a large plurality of transaction data, which can encompass millions or billions of transactions in some instances. The computing system comprises a non-transitory computer readable storage medium storing program instructions for execution by a computer processor in order to cause the computing system to receive first features for an entity in the transaction data, receive second features for a benchmark set, the second features corresponding with the first features, determine an outlier value of the entity based on a Mahalanobis distance from the first features to a benchmark value representing an average for the second features. The output of the risk model can be used to prioritize review by a human data analyst. The data analyst's review of the underlying data can be used to improve the model.

**EP 3 038 046 A1**

**Description**

INCORPORATION BY REFERENCE

This application claims priority to U.S. Provisional Patent Application No. 62/096,244, filed December 23, 2014, which is incorporated by reference in its entirety. The following applications are also incorporated by reference in their entirety: U.S. Patent Application No. 14/463,615, filed August 19, 2014, and U.S. Patent Application No. 14/579,752, filed December 22, 2014.

BACKGROUND

Field

This disclosure relates to systems for detecting fraudulent transactions, such as unauthorized trading activity, in entities' event streams and methods and computer-related media related thereto.

Description of the Related Art

Unauthorized trading in the context of an investment bank is manipulation of profit-and-loss (PNL) or risk, or trades outside of mandate. Put simply, unauthorized trading is internal fraud by a trader with the purpose of misleading a firm as to their true economic risk or PNL. Usually, this begins as an attempt to disguise a loss or outsize risk in the belief that the trader will be able to make good trades before the loss or risky behavior is discovered.
Early detection of unauthorized trading is an important challenge facing organizations today. Trading behaviors are complex and are represented in the underlying electronic data sources in many different ways. With terabytes of transactions in such data sources, organizations have difficulty discerning those transactions associated with authorized risk-taking from those associated with unauthorized activity.

SUMMARY

Disclosed herein are various systems, methods, and computer-readable media for detecting fraudulent transactions, such as unauthorized trading activity, in computing systems.
The disclosed systems, methods, and media can improve functioning of at least one computing system by reducing the data to be analyzed to those data items most likely associated with fraudulent transactions, significantly improving processing speed when determining potentially fraudulent activity.
It should be appreciated that the systems, methods, and media involve processing large pluralities of data that could not be done by a human. For example, a log of transaction data transmitted by computing systems may include hundreds of thousands, millions, tens of millions, hundreds of millions, or even billions of data items, and may consume significant storage and/or memory. Parsing of transaction data, scoring the transactions based on multiple criteria, and selecting transactions potentially associated with fraudulent activity, as well as other processes described herein, cannot feasibly be performed manually, especially in a time frame in which fraudulent activity may be identified early enough to reduce impact of the behavior.
The systems, methods, and devices described herein each have several aspects, no single one of which is solely responsible for its desirable attributes. Without limiting the scope of this disclosure, several non-limiting features will now be discussed briefly.
In at least one embodiment, a computer system for detecting outliers in a large plurality of transaction data is disclosed. Related methods and media are also contemplated. The computer system can have one, some, or all of the following features, as well as other features disclosed herein. The computer system can comprise a network interface coupled to a data network for receiving one or more packet flows comprising the transaction data. The computer system can comprise a computer processor. The computer system can comprise a non-transitory computer readable storage medium storing program instructions for execution by the computer processor in order to cause the computing system to perform functions. The functions can include receiving first features in the transaction data for a subject entity. The functions can include receiving second features in the transaction data for a benchmark sets for one or more benchmark entities. The functions can include determining an outlier value of the entity based on a Mahalanobis distance from the first features to a benchmark value representing a centroid for at least some of the second features.
In the computer system, the benchmark set can comprises a predefined number of entities, from a population, most similar to the subject entity over a time period. The predefined number of entities can represent the predefined number of entities from the population having low Mahalanobis distances to the subject entity. The benchmark set can comprise a predetermined cohort of entities, from a population of entities. The benchmark entity of the benchmark set can be the same as the subject entity. The first features can correspond to a first time and the second features correspond to a second time distinct from the first time. The second time can represent a predefined number of time periods from a third time. The second time can represent the predefined number of time periods from the third time having low Mahalanobis distances to the subject entity.

The present disclosure further comprises a computer-implemented method in which the operations recited in any of the appended claims, and/or the operations disclosed in the present description, are executed. The present disclosure also comprises a computer program product, for example a non-transitory or transitory computer-readable medium, with program instructions that, when executed by one or more processors, are adapted to cause a computing apparatus to perform the operations recited in any of the appended claims, and/or the operations disclosed in the present description.

BRIEF DESCRIPTION OF THE DRAWINGS

A general architecture that implements the various features of the disclosed systems, methods, and media will now be described with reference to the drawings. The drawings and the associated descriptions are provided to illustrate embodiments and not to limit the scope of the disclosure. For instance, the flow charts described herein do not imply a fixed order to the steps, and embodiments of which may be practiced in any order that is practicable.

Figure 1 shows an overview of a data flow between model components according to at least one embodiment.

Figure 2 shows an example variance of a population distribution and an example variance of a cohort distribution and demonstrates an inventive realization of a challenge in modeling data.

Figure 3 provides a graphical depiction of cohort and historical risk scores implemented in certain embodiments.

Figures 4A-4D show a method for determining a population risk score. More specifically, Figure 4A shows feature vectors for all entities at a given time as points in a risk space. Figure 4B shows a selection of a reference entity and the five most similar entities. Figure 4C shows a polygon of the most similar entities and its geometric centroid. Figure 4D shows the population score as the Mahalanobis distance between the reference entity and the centroid.

Figures 5A-5D show a method for determining a cohort score. More specifically, Figure 5A shows feature vectors for all entities at a given time as points in a risk space. Figure 5B shows a selection of a reference entity and the members of the cohort. Figure 5C shows a polygon of the cohort and its geometric centroid. Figure 5D shows the population score as the Mahalanobis distance between the reference entity and the centroid.

Figures 6A-6D show a method for determining a historical score. More specifically, Figure 6A shows feature vectors for all entities at a given time as points in a risk space. Figure 6B shows a selection of a reference entity and the five most similar entities. Figure 6C shows a polygon of the most similar entities and its geometric centroid. Figure 6D shows the population score as the Mahalanobis distance between the reference entity and the centroid.

Figure 7 shows some example spatial population distributions that may be observed with transaction data.

Figure 8 shows some example Shrinking Convex Hulls distributions that may be observed with transaction data.

Figure 9 shows some example modified Hamming distance distributions that may be observed with transaction data.

Figure 10 shows some example hypercube meshes implemented in grid monitoring, as may be observed with transaction data.

Figure 11 shows an example dossier view for graphically reviewing an entity's data prioritized by the risk model.

Figure 12 shows a visual representation of a control collar.

Figure 13 provides an overview of how a data analyst's feedback can be incorporated in the unsupervised model and in machine learning for improving the unsupervised model.

Figure 14 illustrates a computer system with which certain methods discussed herein may be implemented.

In the drawings, the first one or two digits of each reference number typically indicate the figure in which the element first appears. Throughout the drawings, reference numbers may be reused to indicate correspondence between referenced elements. Nevertheless, use of different numbers does not necessarily indicate a lack of correspondence between elements. And, conversely, reuse of a number does not necessarily indicate that the elements are the same.

DETAILED DESCRIPTION

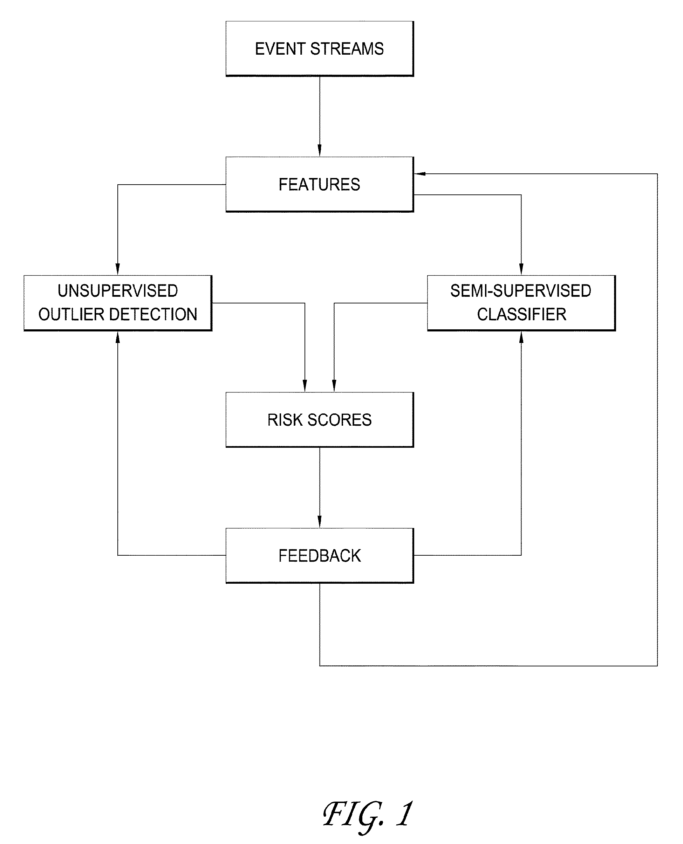

As shown in the overview of Figure 1, this disclosure relates to computing systems 100 for detecting fraudulent activity, such as unauthorized trades, in entities' event streams 102. As used herein, "unauthorized trades" refers broadly to a range of activities including, but not limited to, rogue trading or trade execution in firm, customer, client or proprietary accounts; exceeding limits on position exposures, risk tolerances, and losses; intentional misbooking or mismarking of positions; and creating records of nonexistent (or sham) transactions. Other fraudulent activity detection is contemplated to fall within the scope of this disclosure. The event streams 102 represent large pluralities of unscreened data items that have not been previously confirmed as associated with fraudulent transactions. The systems 100 beneficially target finite analyst resources to the data items most likely to be associated with fraudulent activity.

The disclosed computing systems 100 identify relevant features 104 in or derived from the event streams 102. Such features 104 are input to a model for unsupervised outlier detection 106. The unsupervised outlier detection 106 outputs risk scores 108. These risk scores can indicate which data may warrant further investigation by a human data analyst. After reviewing the data targeted based on risk score, the data analyst generates explicit and/or implicit feedback 110. This feedback 110 can be used to improve the unsupervised outlier detection 106 over time. The unsupervised outlier detection 106 can be implemented in conjunction with a machine learning environment, such as a semi-supervised classifier 112. A semi-supervised classifier 112 is a machine learning technique that uses a small number of labeled points to classify a larger universe of unlabeled points. For example, the labeled points can reflect feedback 110 by the data analyst. Thus, the data analyst's feedback 110 can be used to refine the risk scores of features that have not been investigated.

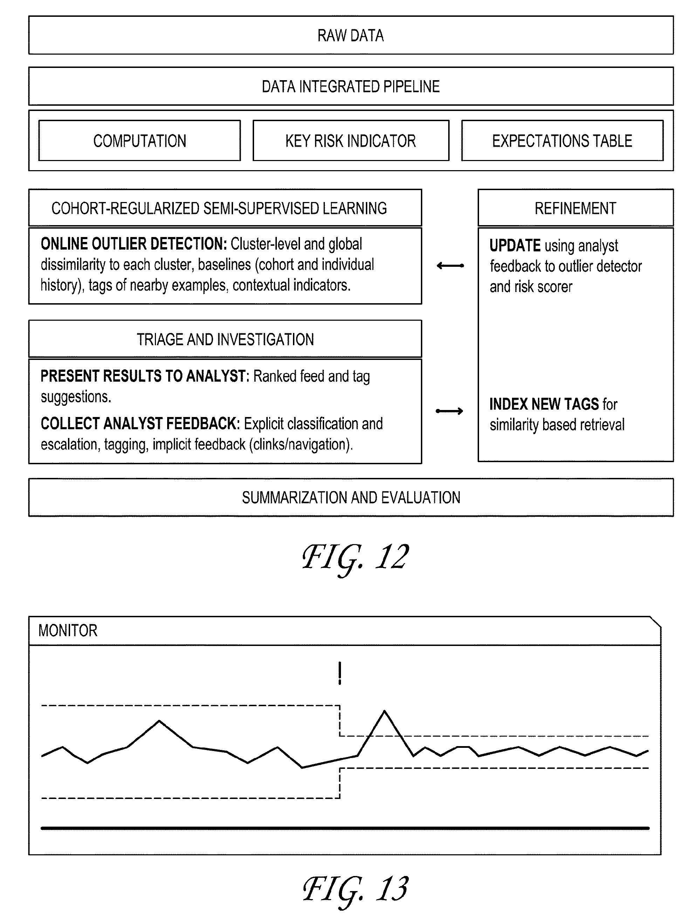

In general, and as discussed in greater detail in relation to Figure 12, such a computing system can include one or more computer readable storage devices, one or more software modules including computer executable instructions, a network connection, and one or more hardware computer processors in communication with the one or more computer readable storage devices.

### I. Inventive realizations

Due, among other things, to the complexity of the data sources containing the relevant transactions, any model attempting to satisfactorily identify unauthorized trades faces a number of challenges. This disclosure outlines some of the inventive realizations underlying model development and utility. Certain embodiments can reflect one, some, or all of these inventive realizations.

### A. Lack of training data

There are few clear and verified cases of unauthorized trading. Although some high-profile incidents have been reported, most cases remain undetected or fall below a loss threshold warranting disclosure. Due to the limited sample size, a naïve statistical model would simply classify every incident as "not unauthorized trading." Such a model would be correct in the vast majority of cases but would be practically worthless because it would fail to correctly classify any actual incidents of unauthorized trading.

### B. Scale and heterogeneity

Transactions can be stored in a variety of input formats. Transaction data quality is neither guaranteed nor uniform across data sources. Such transaction data is generated at gigabytes per day, compounding the other challenges discussed in this section. Pre-computation to reduce scale would simultaneously reduce the richness of transaction data that is required for attribution, exploratory analysis, and prototyping of new features. As a result, scale is an important consideration not only for the data integration pipeline, but also for the statistical model.

### C. False positives

It is difficult to parse legitimate business activity from unauthorized trading. Single-point alerting systems, such as threshold-based aggregate key risk indicators, generate large numbers of false positives and mask signal in noise.

### D. High correlation

By nature, many features, such as key risk indicators, are highly correlated. For example, given the standard definition of after-hours trades (trades after a certain cutoff time) and late booking (trades booked after a certain time on trade date), the majority of after-hours trades are also flagged as late bookings. Correlated features introduce additional friction to supervised model convergence and destabilize coefficients. There will be very few examples of risky after-hours trades that are not late bookings, since the associated key risk indicators tend to fire together. This is primarily a challenge for interpretability of model outputs. If the goal of the unsupervised model is quantifying risk, key risk indicator attribution is not important.

### E. Autocorrelation

Features, such as key risk indicators, are frequently auto-correlated because they reflect underlying business processes that are somewhat repetitive and predictable. For example, a trader who does many after-hours trades in a given week is highly likely to do so again the following week.

### F. Dimensional reduction

In order to build a holistic picture of risk, it is desirable to add new features to the unsupervised model over time. But as the number of features increases and input data becomes increasingly sparse, many modeling approaches begin to lose fidelity. Rare events that are highly indicative of enhanced risk, but only register in a few dimensions, will be lumped into the same overall category as fairly insignificant events that trigger a score across a large number of dimensions.

As the number of features, such as key risk indicators, increase monotonically over time, additional data sources can be added across an organization, each with its own set of features. This growth in the number of dimensions leaves any distance-based or clustering model vulnerable to the curse of dimensionality. High-dimensional spaces can be sparse and pairwise distances may converge to the mean. It may be beneficial to monitor the number of features and limit the number of features under consideration to control or reduce dimensionality.

### G. Empirical distribution features

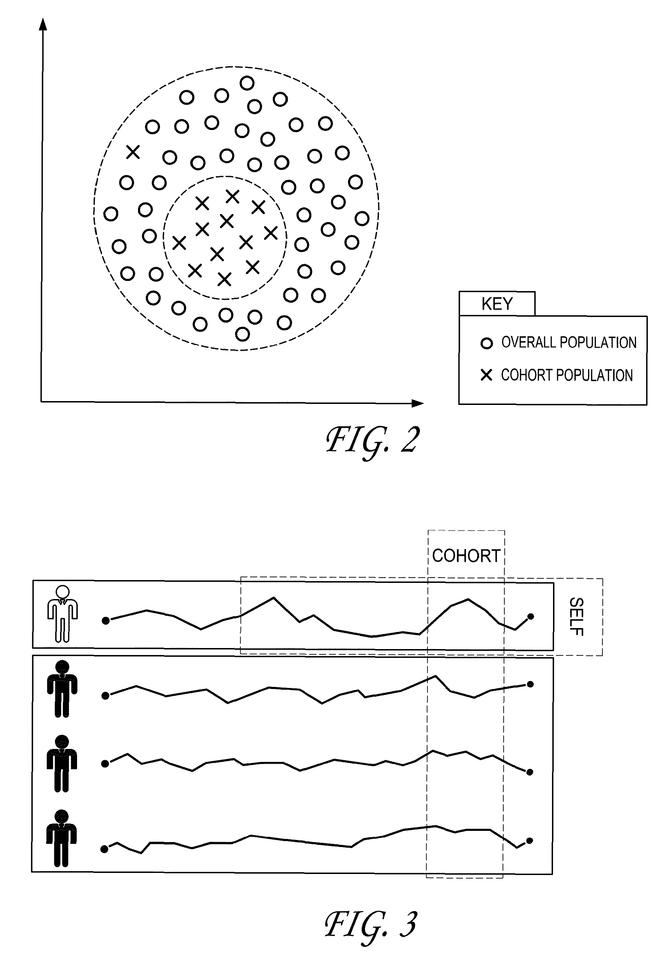

Certain characteristics of transaction data pose challenges to standard modeling approaches. As shown in Figure 2, the presence of subpopulations with differing variance (heteroscedasticity) weakens the power of outlier detection because behaviors that are highly anomalous for a given subpopulation may fall within the variance of the overall sample. The distributions of input indicators may be clumped into subpopulations with traders for a given product or business line that display similar features.

### H. Time

Signals from different features, such as key risk indicators, can be realized at different points in the lifecycle of a trade. If modeling is delayed to gain complete knowledge of all significant risk factors before returning useful results, this might cause the system to delay investigation of anomalous events and increase the risk of realized losses.

### I. Germination

Unauthorized trading typically begins with a small breach that grows into a significant violation as traders attempt to cover their losses. A desirable risk model can identify such behavior before it escalates without presenting investigators with a deluge of insignificant cases.

### J. Cross-business application

The nature of trading businesses varies widely, and the severity of different input indicators varies accordingly. For example, a program trading desk is expected to perform more cancels and corrects than an exotics desk. Every time a trader needs to cancel or amend a program on an index, this results in cancels on any trades in the underlying names. For this reason, in certain embodiments, the unsupervised model may not treat all indicators equally for all entities under focus.

### II. Model inputs

The following describes data input to the unsupervised model, which is discussed in greater detail below.

### A. Entities, event types

The unsupervised model is applied to one or more entities. Entity is a broad term and is to be given its ordinary and customary meaning to one of ordinary skill in the art and includes, without limitation, traders, books, counterparties, and products.

An entity generates events with associated times. Events can include, without limitation, trades, exceptions, and emails. New event types can also be derived from other events of the entity. For example, such derived event types can include key risk indicators. Key risk indicators tag specific events associated with an entity as risky given specific domain knowledge, such as, cancels-and-corrects, unapproved trades, and unconfirmed trades. Key risk indicators can be implemented as Boolean triggers, generating a new event whenever specific conditions are met. For example, a new key-risk-indicator event can be output for the entity when a trade was performed after hours. Other new event types can be generalized to encompass a variety of functions defined over a collection of events at particular times for an entity, for example, trader positions exceeding risk limits, or even complex combinations of event-types over time, for example, "toxic combination" events that have a high-risk signal.

## B. Features

The unsupervised model is applied to a variety of features. Feature is a broad term and is to be given its ordinary and customary meaning to one of ordinary skill in the art and includes various analytical data inputs. Examples of features include, without limitation, key risk indicators and exceptions. In at least one embodiment, one, some, or all of the following features are selected, which represent counts of particular trade-event types over the course of a day for a trader: cancels-and-corrects; trades against a counterparty who suppresses confirmations (excluding where a central counterparty assumes counterparty risk and guarantees settlement of a trade); mark violations; PNL reserves or provisions; sensitive movers; settlement breaks; unapproved trades; and unconfirmed trades.

Features quantify facets of trader behavior and serve as input to the unsupervised model. A feature can be a timeseries or constant produced by a function applied to historic events associated with an entity for a time period. A feature can also reflect an aggregation through different lengths of time (for example, daily, weekly, or of the total history), an aggregation across event-types, or a combination of various event-types with a complex function, for example, "severity weighting" the vector of inputs to a feature by using the dollar notional of the trade events associated with a trader.

## III. Risk Models

An unsupervised model is applied to features to calculate one or more risk scores for an entity. The unsupervised model described can resolve and manage a number of features. The quality and richness of the features input to the unsupervised model serve as the backbone of this resolution capability. In certain embodiments, entity risk scores are calculated daily based on one or more daily features. Nevertheless, other time periods and frequencies are also contemplated. Risk scores can be based on an arbitrary scale and their values need not suggest a probability.

## A. Optional feature normalization

Input features can be contextualized with the values of related features for normalization. Examples of normalization include the following: population normalization; cohort normalization; historical normalization; and asset type normalization. In population normalization, an input feature for an entity is normalized with respect to the average recent feature value across all entities. In cohort normalization, an input feature for an entity is normalized with respect to the related feature in the entity's cohort. A cohort is a set of similar entities chosen based on domain knowledge and organizational context. In historical normalization, an input feature is normalized with respect to events in the recent history of the entity. And in asset type normalization, the input feature is normalized with respect to features corresponding with some asset type.

Cohort and historical normalization are shown in greater detail in Figure 3. In Figure 3, an input feature for an entity (a trader) is shown in box 302. Related input features for entities (traders) in the entity's cohort are shown in boxes 304, 306, and 308. Box 310 shows the events in the entity's recent history used for normalization. Box 312 shows the events in the cohort used for normalization.

Cohort normalization can be a particularly desirable technique because using predefined cohorts for normalization detect outliers from a sub-population with a variance that differs significantly from other sub-populations and the overall population. For example, some trading patterns that are considered normal for the general population can be highly unusual for a specific desk.

## B. Unsupervised outlier detection

Features (normalized or not) can be input to an unsupervised outlier detection model. Certain embodiments include the inventive realization that a desirable model for outlier detection reflects a normality component and a deviance component. Thus, in general, the unsupervised model receives first features for an entity, receives second features for a benchmark set, the second features corresponding with the first features, and determines an outlier value based on a Mahalanobis distance from the first features to a benchmark value representing an average for the second features. In this generalized process, the average behavior of the benchmark set reflects the notion of normality and use of the regularized Mahalanobis distance reflects the notion of deviance. The Mahalanobis distance is derived from the covariance matrix of the benchmark set's features and advantageously adjusts for the scale and/or frequency of features, as well as inter-feature correlations, in a data-driven way, rather than explicit weighting.

The risk score output by the unsupervised model can be defined as the Mahalanobis distance to a benchmark value representing the average in feature space for a set of entities. For example, in at least one embodiment, the unsupervised model risk score $R_{\mathcal{P}}(\vec{x})$ can be expressed by equation (1):

$$R_{\mathcal{CP}}\left(\vec{x}\right) = D_{\mathcal{P}}\left(\vec{x}, \vec{B}_{\mathcal{S}}\right) \qquad (1)$$

where

$\vec{x} = \begin{bmatrix} x_1 \\ \vdots \\ x_n \end{bmatrix}$   represents the entity

$x_1 \ldots x_n$   represent the features of the entity

$D_{\mathcal{P}}$   represents the Mahalanobis distance

$\vec{B}_{\mathcal{S}} = \dfrac{1}{N} \sum\limits_{s \in \mathcal{S}} \vec{s}$   represents the benchmark value for the features, and

$\mathcal{S}$   represents the set of entites

The Mahalanobis distance ($D_{\mathcal{P}}$) utilized in determining the risk score can be expressed by equation (2):

$$D_{\mathcal{P}}\left(\vec{x}, \vec{y}\right) = \sqrt{(\vec{x} - \vec{y})^T S_{\mathcal{P}}^{-1}(\vec{x} - \vec{y})} \qquad (2)$$

where

$\vec{x} = \begin{bmatrix} x_1 \\ \vdots \\ x_n \end{bmatrix}$   represents the entity

$\vec{y} = \begin{bmatrix} y_1 \\ \vdots \\ y_n \end{bmatrix}$   represents a second entity or the benchmark point

$\mathcal{P}$   represents the set of entities, and

$S_{\mathcal{P}}$   represents the covariance matrix

When the covariance matrix ($S_{\mathcal{P}}$) is singular, covariance can be regularized by adding $\lambda I$, truncating singular values, or techniques such as Poisson sampling.

### 1. Population outlier risk score

In certain embodiments, the benchmark set can be the centroid of the $n$ most behaviorally similar entities from the population of entities for a certain time period. For example, the benchmark set can be the centroid of the 16 most behaviorally similar traders across the whole population on the same day. Similarity is reflected by the Mahanobis metric. For example, for an entity ($\vec{x}$), the population outlier model risk score can be expressed by equation (3):

$$\text{Population Risk Score}\left(\vec{x}\right) = D_{\mathcal{P}}\left(\vec{x}, \vec{B}_{\min16(\mathcal{P})}\right) \qquad (3)$$

where

$$\vec{x} = \begin{bmatrix} x_1 \\ \vdots \\ x_n \end{bmatrix} \qquad \text{represents the entity}$$

$D_{\mathcal{P}}$      represents the Mahalanobis distance represents the average of the 16 traders that

$\vec{B}_{\min 16(\mathcal{P})}$      have the lowest distance to $\vec{x}$ as defined by $D_{\mathcal{P}}\left(\vec{x}, \vec{y}\right)$, and

$\mathcal{P}$      represents the set of traders on that day

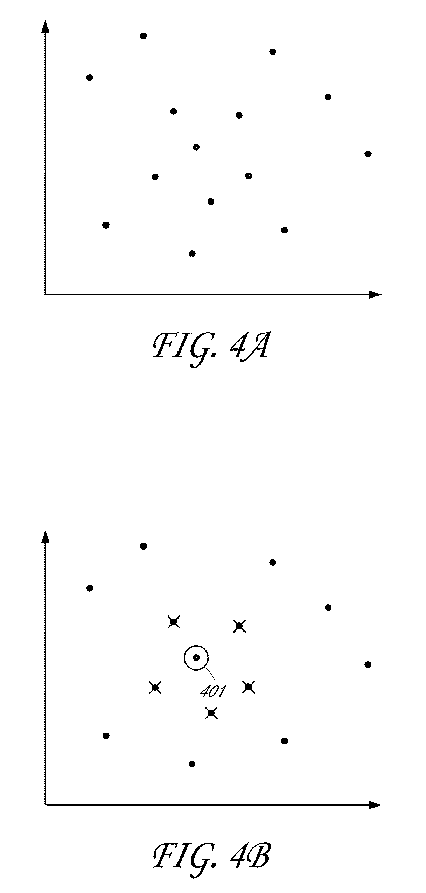

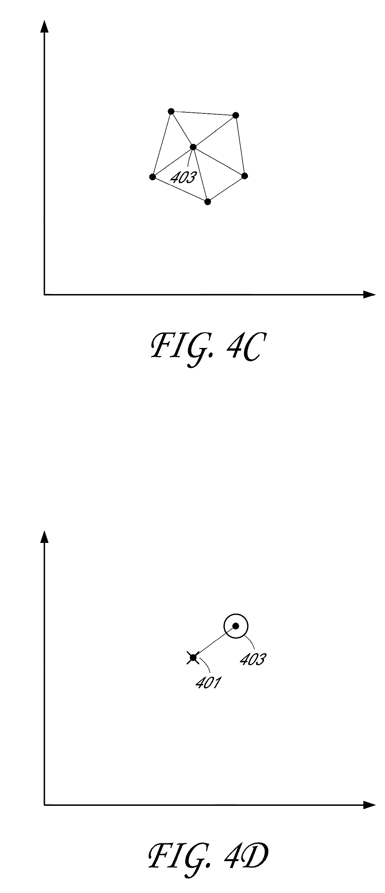

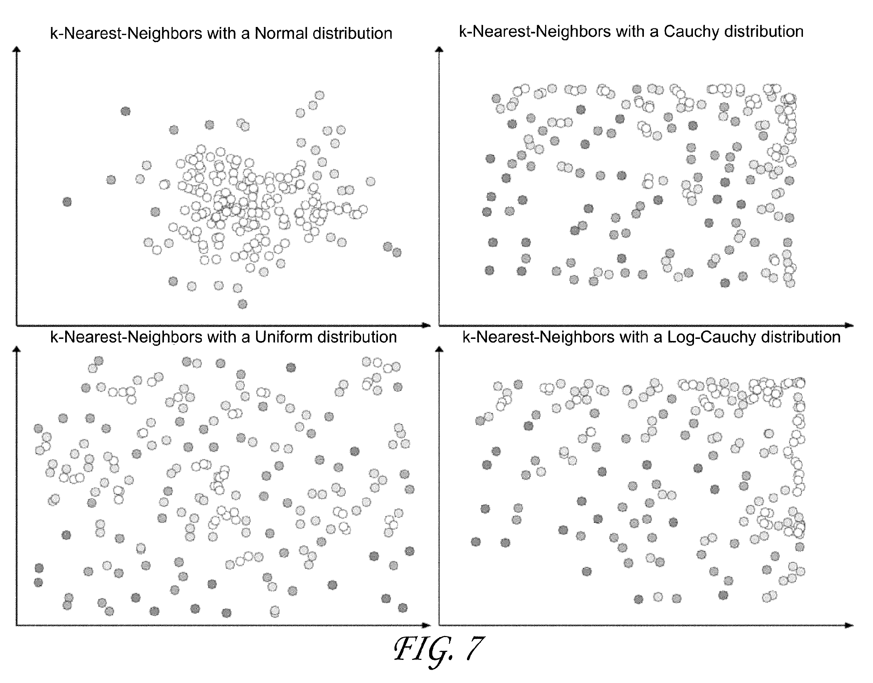

Figures 4A-4D show a method for determining a population risk score. More specifically, Figure 4A shows feature vectors for all entities at a given time as points in a risk space. Figure 4B shows a selection of a reference entity and the five most similar entities. Figure 4C shows a polygon of the most similar entities and its centroid. Figure 4D shows the population score as the Mahalanobis distance between the reference entity and the benchmark set. Figure 7 shows the variation of population risk scores given some example underlying population distributions similar to what may be observed in transaction data.

## 2. Cohort outilier risk score

In certain embodiments, the benchmark set can be the centroid of entity's cohort. In other words, the cohort outlier risk score can reflect a covariance-adjusted measure of how different an entity (such as a trader) is from the entity's cohort, using a Mahalanobis metric derived from the same cohort. For example, for an entity $(\vec{x})$, the cohort outlier model risk score can be expressed by equation (4):

$$\text{Cohort Risk Score}\left(\vec{x}\right) = D_{\mathcal{C}}\left(\vec{x}, \vec{B}_{\mathcal{C}}\right) \qquad (4)$$

where

$\mathcal{S}$      represents the entity

$D_{\mathcal{C}}$      represents the Mahalanobis distance

$\vec{B}_{\mathcal{C}}$      represents the average of the cohort represents a cohort of traders sharing an

$\mathcal{C}$      attribute, such as a common OE code, common instrument types, or traders that worked in the back office

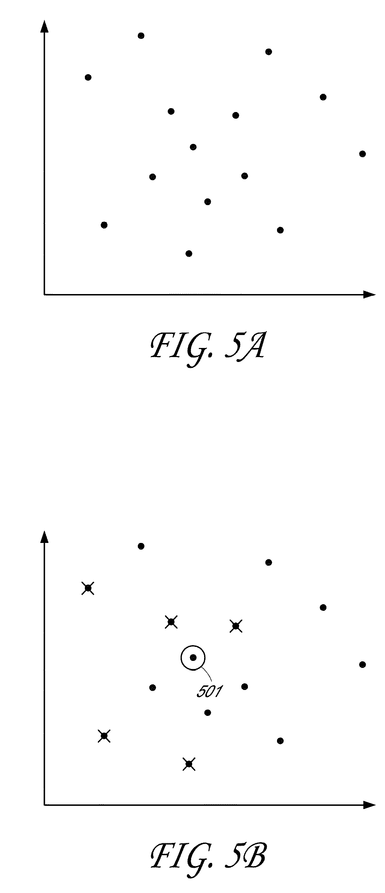

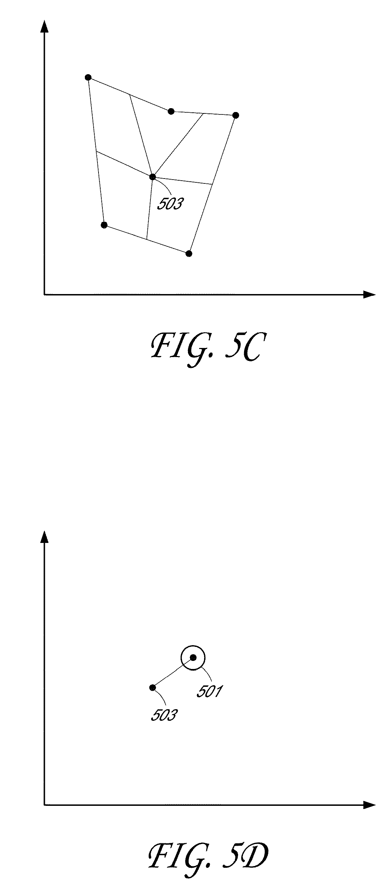

Figures 5A-5D show a method for determining a cohort score. More specifically, Figure 5A shows feature vectors for all entities at a given time as points in a risk space. Figure 5B shows a selection of a reference entity and the members of the cohort. Figure 5C shows a polygon of the cohort and its geometric centroid. Figure 5D shows the population score as the Mahalanobis distance between the reference entity and the centroid.

## 3. Historical outlier risk score

In certain embodiments, the benchmark set can be the centroid of the entity's own behavior over a time period. For instance, the historical outlier risk score can reflect a covariance-adjusted measure of how different an entity's behavior on a given day is from the centroid of a benchmark formed by the entity's behavior over the previous 30 days. Desirably, a subset of n units of the selected time period can be implemented to avoid over-indexing. For example, the historical outlier risk score can reflect only the 16 most similar days out of the selected 30 days to avoid over-indexing on past one-off days, extreme market events, and the like. It should be understood that the 30- and 16-day time periods discussed here are illustrative and non-limiting. Other time periods are contemplated. In some implementations, for an entity $(\vec{x})$, the historical outlier model risk score can be expressed by equation (5):

$$\text{Historical Risk Score}\left(\vec{x}\right) = D_{\mathcal{H}30(x)}\left(\vec{x}, \vec{B}_{min16(\mathcal{H}30)}\right) \qquad (5)$$

where

$D_{\mathcal{P}}$      represents the entity

$D_{\mathcal{H}30(x)}$ represents the Mahalanobis distance represents the average of the 16 historical

$\vec{B}_{\min16(\mathcal{P})}$ days for the same entity $\vec{y}$ that have the lowest distance to $\vec{x}$ as defined by $D_{H30(x)}\overrightarrow{(x, y)}$, and represents the set of 30 historical data

$\mathcal{H}$ 30(x) points (namely, the last 30 days) for the entity $\vec{x}$

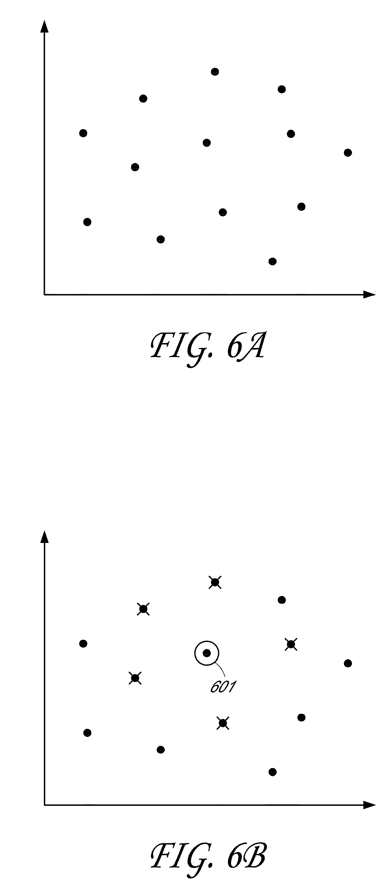

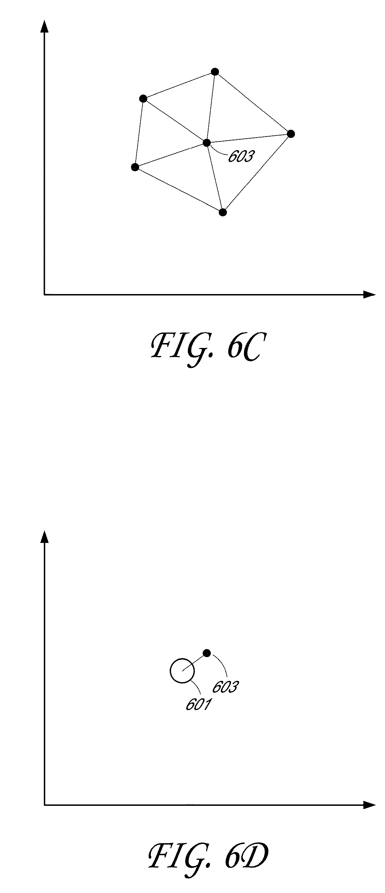

Figures 6A-6D show a method for determining a historical score. More specifically, Figure 6A shows feature vectors for all entities at a given time as points in a risk space. Figure 6B shows a selection of a reference entity and the five most similar entities. Figure 6C shows a polygon of the most similar entities and its geometric centroid. Figure 6D shows the population score as the Mahalanobis distance between the reference entity and the centroid. It should be recognized extreme historical outlier risk scores can result from weekend behavior.

**C**. <u>Other unsupervised outlier detection</u>

Other outlier detection techniques can be utilized as an alternative to or in junction with one or more of the techniques discussed above. Such outlier detection techniques include, without limitation, distance- and density-based unsupervised techniques.

**1**. <u>Local outilier factor and density-based outliers</u>

Suitable unsupervised density-based anomaly detection methods include, without limitation, the Local Outlier Factor (LOF) technique proposed by Breunig et al. "LOF: identifying density-based local outliers." In ACM Sigmod Record, vol. 29, no. 2, pp. 93-104. ACM, 2000, which is incorporated by reference in its entirety. Such methods search for outliers through local density estimation.

**2**. <u>Shrinking Convex Hulls</u>

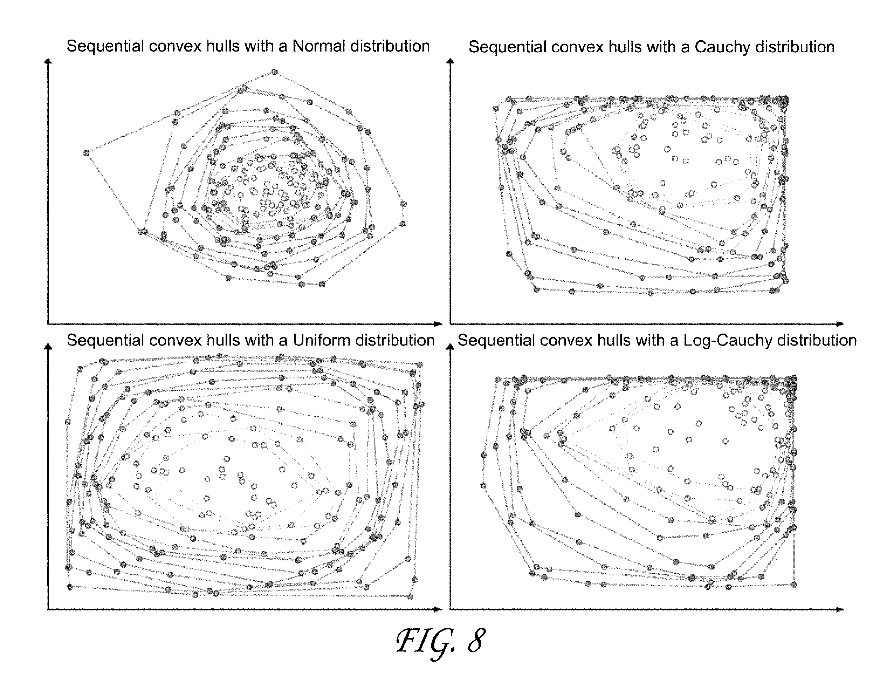

Shrinking Convex Hulls yield an *n*-dimensional generalization of percentile ranking. In this approach, clustering is achieved by constructing the convex hull for a set of points. Example Shrinking Convex Hulls are shown in Figure 8. In certain embodiments, all the points forming the simplices of the hull can be labeled with with a risk score $R_i$, and the complex hull can be iteratively calculated for previously calculated points inside the hull, assigning these new points a risk score $R_j < R_i$ until insufficient points remain to form a hull.

In addition to using the calculation to assign a risk score (such that, for example, the points on the outermost hull are the riskiest), Shrinking Convex Hulls can also be a mechanism for sampling the population, in which the outermost hulls are subject to more detailed processing and scrutiny via some of the other techniques detailed in this section. This technique can be desirably implemented on subsets of the dimensions to capture richer sets of feature interactions and reduce computational complexity.

**3**. <u>Modified Hamming distance</u>

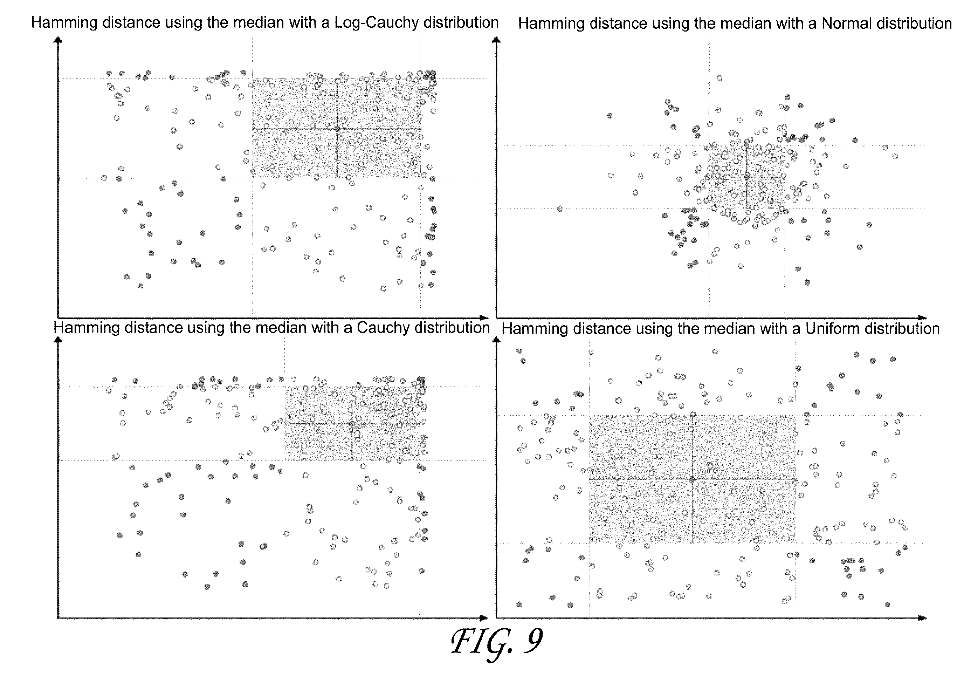

The Hamming distance is the number of exchanges between two vectors $\vec{B}_{\mathcal{C}}$ $\mathcal{C}$ to make them the same. This technique can be implemented for objects in a discrete system (e.g., integers). Nevertheless, this technique can be modified to determine how far removed a particular entity (such as a member of a cohort or population) is from the average by comparing the entity's position in feature space to the average (mean or median) calculated, excluding the entity from the cohort. Using the aggregate deviation (the standard deviation or MAD for means and median averages respectively), the number of indicators that the entity has with values $x_i > \tilde{x} + \Delta x$ can be counted and used as an outlier or risk indicator. This can also be used to determine the trend over a time, calculating whether a particular entity is trending away from the average cohort behavior. Example modified Hamming distance distributions are shown in Figure 9.

**4**. <u>Grid monitoring</u>

Grid monitoring divides feature space into a mesh of hypercubes. For each point in this *D*-dimensional space, the *k* nearest neighbors (where *k* >> *D*) can be used to construct the convex hull of these neighbors. Risk can be assigned to the space by counting how many of these hulls cover a particular region, the space can be populated with historical, population, or cohort data, and the number of cases that fall into each grid can be counted. The feature score for a given entity is inversely proportional to the density of the region that individual falls into.

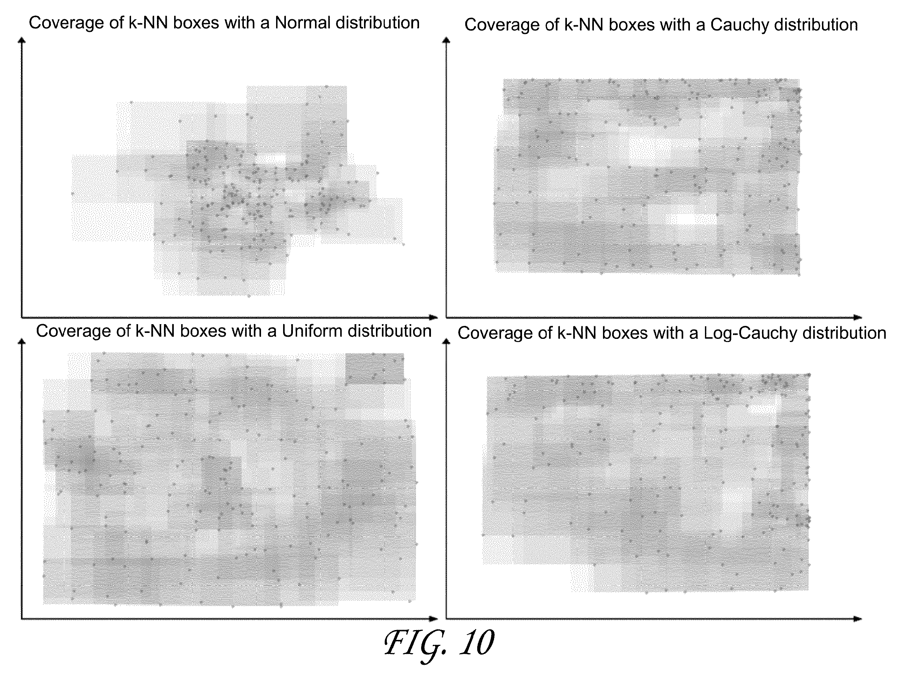

This technique can be desirably implemented for generating an alert (discussed below) whenever a set of features for an entity falls into a region that is sparsely populated. Example hypercube meshes are shown in Figure 10.

**D. Trade Validation**

If there is no record of an external event confirming the existence of a trade and accuracy of the booking, then it may be a fictitious booking to cover up unauthorized risk taking (dummy trade). At a minimum, the representation of the trade in the firm's books and records may not accurately reflect the risk that trade represents. By searching across multiple sources for evidence to validate the trade, the model isolates exceptional events that pose a particular concern.

Examples of confirmation events to validate a trade include, without limitation, settlement or cash flow events; exchange or counterparty trade reporting; confirmation matching. Examples of suspicious events include, without limitation, settlement or confirm failures, Nostro breaks; and "DKs" (where a counterparty "doesn't know" or agree to the existence or terms of a trade).

**IV. Machine learning**

Semi-supervised machine learning can be used with explicit and/or implicit feedback from a data analyst (discussed in the next section) to combine the values of the raw, transformed, and/or contextualized feature observations, or unsupervised model risk scores, into a semi-supervised machine learning model risk score. This section provides an overview of semi-supervised machine learning and discusses its features, benefits, and interpretability in the context of fraudulent transaction detection.

**A. Logistic regression**

Logistic regression is a statistical technique for training a linear model. Certain embodiments include the inventive realization that logistic regression has characteristics making it desirable as a semi-supervised machine learning method for use in the disclosed embodiments. Such characteristics include the following: convexity, online, fast to warmstart, keeps up with "moving targets," lightweight, robustness to outliers and incorrect labels, and robustness to a large number of low-signal or irrelevant features, especially when regularization is used, and interpretability.

Convexity refers to the fact that there is a unique optimum. As such, it is amenable to incremental gradient descent and quasi-Newton approaches. Online means that logistic regression admits a very simple online Stochastic Gradient Descent (SGD) update, making it very fast for training at scale. Fast to warmstart refers to the fact that initial convergence is generally more rapid than with other common incremental learning algorithms. Because logistic regression keeps up with moving targets, it can work in an adaptive setting where the behavior modeled evolves over time. In particular, the online algorithm need not be viewed as an approach to batch optimization. Lightweight refers to the fact that, as a linear classifier, it is easy to evaluate (one dot product) and store (one weight per feature). This is especially helpful when evaluating performance, backtesting, and evaluating drift. Non-linearities in the raw data are captured through the use of expressive features and interaction terms. For example, quadratic interaction terms between a categorical business indicator and the other features allow for the simultaneous learning of per-business and overall signals in a unified setting. Robustness to outliers is especially important when learning from human input, especially implicit human input. Finally, robustness to low-signal features allows the easy inclusion of new experimental observation variables without running the risk of ruining the model, as well allows for bias towards inclusion of many features.

In certain embodiments, a training set of examples $(y_1, \boldsymbol{x}_1), \dots (y_N, \boldsymbol{x}_N)$ are input to the linear model, where

$y_i$  represents a binary label $y_i \in \{-1, +1\}$

$x_i$  represents a feature vector $D_{\mathcal{H}}30(x)$

In at least one embodiment, the linear model optimizes a convex loss (L) according to equation (6).

$$\mathcal{L}(\boldsymbol{w}, b; \boldsymbol{y}, \boldsymbol{X}, \boldsymbol{\alpha}) = \frac{1}{A} \sum_i \alpha_i \log\left(1 + e^{-y_i(\boldsymbol{w} \cdot \boldsymbol{x}_i - b)}\right) + \lambda R(\boldsymbol{w}) \quad (6)$$

where
w  represents a weight vector

*b*    represents a constant

$\vec{B}_{\min 16(\mathcal{P})}$    represents an importance weight

$\alpha_1 \dots \alpha_N$    represent individual importance weights

$\lambda R(w)$    represents a regularization term for the loss where *R* is a convex function and scalar $\lambda$ is a tunable parameter to determine the desired degree of regularization

Equation (6) represents a significant improvement over standard convex loss functions in the context of the disclosed embodiments because it includes the regulation term and per-example importance weights. Regularization penalizes the complexity of *w* (and therefore the learned model) to prevent over-fitting and improve generalization performance. Importance weights capture label confidence and are particularly valuable when utilizing analyst activity to label examples.

**B**. **Interpretability**

An interpretable model not only expedites the investigation process, but also enables rapid and expressive user feedback, which ultimately improves the model. Below, several lightweight metrics are discussed that are useful for interpreting the output of the linear model.

**1**. **Top signals in an example**

The relative significance of the set of features *S* in the overall classification of $X_k$ can be expressed with equation (7).

$$\Delta(k, S) = \frac{1}{N} \sum_{i=1}^{N} \sum_{f \in S} w_f \left( x_{kf} - x_{if} \right) \quad (7)$$

The values of $\Delta$ are directly comparable across examples and between comparable feature sets and are additive in *S*. As a result, $\Delta(k, S_1 \cup S_2) = \Delta(k, S_1) + \Delta(k, S_2)$.

Values of $\Delta$ can be interpreted as follows. When $\Delta(k, S)$ is close to 0, the collective values of example $x_k$ for features *S* are unremarkable. When $\Delta(k, S)$ is strongly positive or negative, it indicates that the feature set *S* is a strong signal suggesting an outcome of +1 or -1, respectively.

**2**. **Top signals overall**

The empirical significance of the set of features *S* to the model overall can be expressed with equation (8).

$$V(S) = \text{Var}_i \left( \sum_{f \in S} w_f x_{if} \right) \qquad (8)$$

*V*(*S*) represents the amount of variability in the linear scores of all examples that is explained by the set of features *S*. The value of *V* is always non-negative and values for different feature sets are directly comparable. Typically, $V(S_1 \cup S_2) \le V(S_1) + V(S_2)$.

**3**. **Choice of *S***

In practice, feature sets *S* are often chosen to group together similar features. This enables interpretation despite multicollinearity. Examples include different variants and facets of the same signals or features (computed using different transformations or normalizations); sub-features derived from some set of features using a particular type of normalization (e.g., all behavioral features benchmarked with a cohort); features derived from the same underlying data; and components from sparse dimensionality reduction.

## C. Development

The logistical regression model accepts unsupervised risk model data as input and makes a "guess" at whether a specific thing is interesting or not. This is referred to as a model-generated "classification." The logistical regression model can be trained by comparing the model-generated classification to a human analyst's classification which indicates whether the human found it interesting. The logistical regression linear model starts with no user feedback. As investigation data and analyst feedback (discussed below) become available, the logistic regression can be trained to improve performance by against investigation outcomes. In order to quantify and validate the improvement from analyst feedback, periodic testing can be used to validate changes in the underlying logistical regression model parameters. For example, A/B testing can be used frequently to validate changes in the model parameters, and desirably each change in the model parameters. Such testing ensures the logistical regression linear model is extensible and adaptable over time and that an implementing organization can have confidence in its outputs.

## V. Data Analyst Review

A human data analyst can review transaction data and provide explicit and/or implicit feedback for use in improving the unsupervised and/or semi-supervised models.

U.S. Patent Application No. 14/579,752, filed December 22, 2014, incorporated herein by reference, describes systems and user interfaces for dynamic and interactive investigation of bad actor behavior based on automatic clustering of related data in various data structures. As described in that application, the automated analysis of the clustered data structures may include an automated application of various criteria or rules so as to generate a tiled display of the groups of related data clusters such that the analyst may quickly and efficiently evaluate the groups of data clusters. In particular, the groups of data clusters (referred to as "dossiers") may be dynamically re-grouped and/or filtered in an interactive user interface so as to enable an analyst to quickly navigate among information associated with various dossiers and efficiently evaluate the groups of data clusters in the context of, for example, a fraud investigation. That application also describes automated scoring of the groups of clustered data structures. The interactive user interface may be updated based on the scoring, directing the human analyst to more dossiers (for example, groups of data clusters more likely to be associated with fraud) in response to the analyst's inputs.

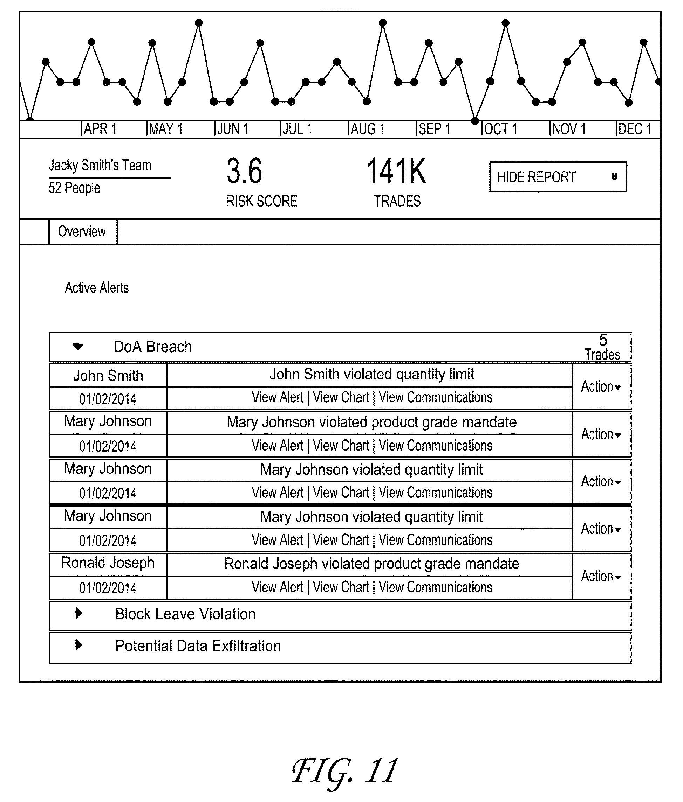

It is contemplated that the unsupervised and/or semi-supervised model outputs can be implemented in conjunction with the systems and user interfaces of that application. Based on the events classified for investigation, the models produce the starting points for that investigation (dossiers) and a set of descriptive statistics for each dossier for display in the disclosed interfaces. This process is designed to target finite investigative resources against the highest priority cases. Investigative outputs form the basis of a feedback mechanism to improve the model over time. An example dossier view is shown in Figure 11.

For the purpose of display in the interfaces, a color code such as a red/yellow/green color code can be associated with entity risk scores. For example, red can denote high-risk incidents that require human investigation by a data analyst, yellow can denote moderate-risk incidents that may require human investigation, and green can denote observations that are likely to be low risk.

At the conclusion of an investigation by a data analyst, the analyst desirably assigns an objective measure to be used in assessing the accuracy of the classifications generated by the semi-supervised model. The objective measure can be converted into a series of classification labels for the event stream associated with an entity. These labels can be used to observe, test, and improve performance of the model over time.

In certain embodiments, when a risk score indicates an outlier, for example, if a trader's behavior deviates sufficiently from the cohort's per the Cohort Risk Score, a risk model alert can generated and presented to the user within the disclosed interface. In this regard, the model can build risk alerts into dossiers containing the related events and entities. For example, a late trade might be linked to the relevant trader, book, counterparty, and product within a dossier. Linking events to related entities is a functionality provided in the underlying data platform. Desirably, the dossier will comprise a plurality of features associated with a trader-level alert, their values, and other underlying characteristics associated with them (e.g., cohort average for outlier alerts).

By clicking into a risk model alert in an interface, users can view an "Alert Dossier" that summarizes the key behavioral features driving the risk score, the composition of the relevant benchmark (such as the cohort), and other relevant information. The Alert Dossier may display information such as the following. The alert title contains the risk score type (e.g., the Cohort Risk Score), the risk score, and the effective date of the alert. A relevant color, such as a background color, can indicate the severity (high/medium/low) of the risk alert. The dossier can also summarize the model input features most responsible for the entity's risk score. Further, each factor can cite a feature of interest and the percentile rank of its value compared to the trader's cohort. In certain cases, alerts may generated without summaries. For example, if there is little unusual activity within an entire cohort, the highest risk score within the cohort will not have a clear driving feature. In some embodiments, the interface can display some or all non-zero features associated with an entity-level alert, their values, and the benchmark average for the relevant time period. Top attributions should be seen as suggestions for which facets of a trader's behavior to most closely investigate (e.g. when reviewing all of a trader's alerts), and their ranking is based on their risk-signaling strength (e.g., how infrequent of an event is it, how much of an outlier vs other traders' behavior, and the like). Features can be ordered by how unusual they appear to the model, rather than their raw values. For example, two "Unapproved Trades" could render higher than 20 "Cancel and Corrects," if having any unapproved trades is more unusual (within the context of the relevant benchmark) than having 20 cancel and corrects. The interface can also display information about the benchmark, such as a list of the individuals making up the cohort used to generate a risk alert. The interface can also display information about the entity.

The severity of the alert can be based on the risk score. For example, the severity can be based on the percentile rank of the trader's Cohort Risk Score within the same cohort on the same day. Example mappings are: 0-50th percentile yields no alert; 50-80th percentile results in a medium severity (amber) alert; 80-100th percentile results in a high severity alert. The alerts can be associated with an appropriate color code to facilitate review.

The end product of each human investigation of the incident in a dossier can be captured by a data analyst with a category label, such as, for example, probable unauthorized trade, bad process, bad data, bad behavior, or no action. These labels desirably correspond to the $R_1 ... R_4$ classifications produced by the semi-supervised model. In addition to this scoring-related feedback, the investigation tools can collect at least two other types of user feedback. First, the investigation tools can collect implicit investigation feedback. By following user interaction during the course of an investigation, the analytical platform gathers useful interactions such as, for example, repeated visits, close interaction, and focused research on certain events and features. Second, the investigation tools can collect explicit investigation feedback. The analytical platform enables users to add tags and comments on various entities and the events they generated.

Semantic processing of those interaction elements and user-generated tags can help refine the risk model. For example, the Mahalanobis distance matrix can be modulated by a weight coefficient derived from the relative density of user views on those features.

Figure 12 provides an overview of how a data analyst's feedback can be incorporated in unsupervised learning described above and semi-supervised learning described below.

Certain trades and events represent such a high level of risk that they are automatically prioritized for investigation regardless of context (escalation events). There are also exceptions that are not concerning when presented in siloes, but indicate acute risk when linked in particular patterns or sequences (toxic combinations). In certain embodiments, escalation events and toxic combinations are event types. These event-types can be automatically flagged for review by a data analyst, in addition to being processed by the unsupervised outlier detection and semi-supervised machine learning models.

Generally, a semi-supervised model will apply classification rules matching certain events or patterns and mapping them to classifications. End users could define toxic combinations of particular interest. For example, the business might decide that all trades that are canceled before external validation require investigation. Such toxic combinations also could be identified from published literature into known incidents (e.g., the "Mission Green" report into the Société Générale Kerviel incident). Given such rules, the system could automatically classify these events as red regardless of risk score.

To escalate alerts that are highly dependent on business context, a semi-supervised model may use additional classification rules, such as placing control collars around observed variables or risk model output scores and classifying as red when the control levels are breaches. A visual representation of such a control collar is shown in Figure 13. These control collars could vary by desk, business, or product to account for subpopulations with differing sample variance. This allows the business to closely monitor exceptions for targeted populations, such as sensitive movers or desks that have recently experienced a significant event like a VaR (value at risk) breach or large PNL drawdown.

## VI. <u>Implementation mechanisms</u>

The techniques described herein can be implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, server computer systems, portable computer systems, handheld devices, networking devices or any other device or combination of devices that incorporate hard-wired and/or program logic to implement the techniques.

Computing device(s) are generally controlled and coordinated by operating system software, such as iOS, Android, Chrome OS, Windows XP, Windows Vista, Windows 7, Windows 8, Windows Server, Windows CE, Unix, Linux, SunOS, Solaris, iOS, Blackberry OS, VxWorks, or other compatible operating systems. In other embodiments, the computing device may be controlled by a proprietary operating system. Conventional operating systems control and schedule computer processes for execution, perform memory management, provide file system, networking, I/O services, and provide a user interface functionality, such as a graphical user interface ("GUI"), among other things.

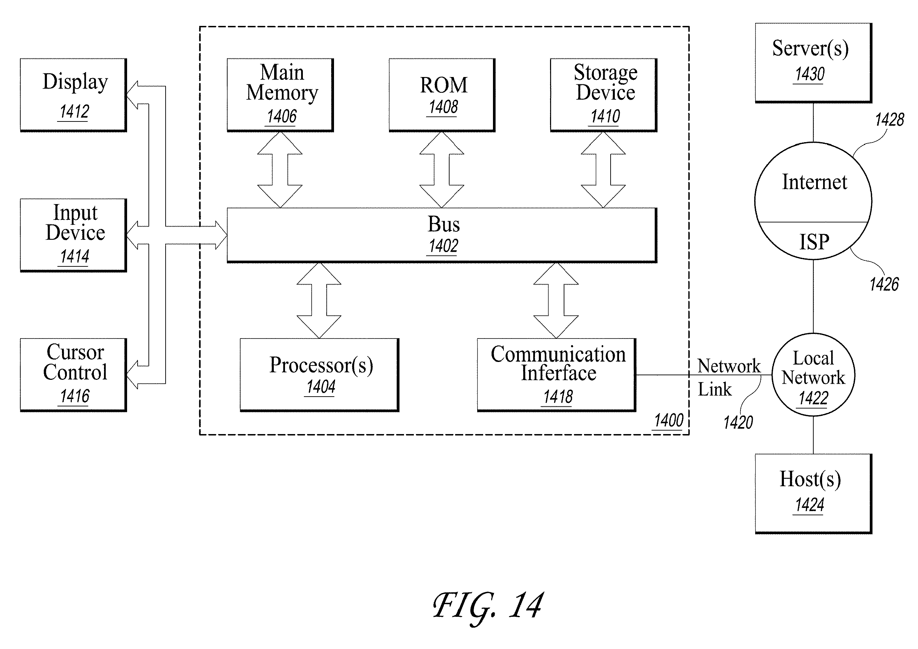

For example, Figure 14 is a block diagram that illustrates a computer system 1400 upon which an embodiment may be implemented. For example, any of the computing devices discussed herein may include some or all of the components and/or functionality of the computer system 1400.

Computer system 1400 includes a bus 1402 or other communication mechanism for communicating information, and a hardware processor, or multiple processors, 1404 coupled with bus 1402 for processing information. Hardware processor(s) 1404 may be, for example, one or more general purpose microprocessors.

Computer system 1400 also includes a main memory 1406, such as a random access memory (RAM), cache and/or other dynamic storage devices, coupled to bus 1402 for storing information and instructions to be executed by processor 1404. Main memory 1406 also may be used for storing temporary variables or other intermediate information during execution of instructions to be executed by processor 1404. Such instructions, when stored in storage media accessible to processor 1404, render computer system 1400 into a special-purpose machine that is customized to perform the operations specified in the instructions.

Computer system 140 further includes a read only memory (ROM) 1408 or other static storage device coupled to bus 1402 for storing static information and instructions for processor 1404. A storage device 1410, such as a magnetic disk, optical disk, or USB thumb drive (Flash drive), etc., is provided and coupled to bus 1402 for storing information and instructions.

Computer system 1400 may be coupled via bus 1402 to a display 1412, such as a cathode ray tube (CRT) or LCD display (or touch screen), for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

Computing system 1400 may include a user interface module to implement a GUI that may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module," as used herein, refers to logic embodied in hardware or firmware, or to a collection of software instructions, possibly having entry and exit points, written in a programming language, such as, for example, Java, Lua, C or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. The modules or computing device functionality described herein are preferably implemented as software modules, but may be represented in hardware or firmware. Generally, the modules described herein refer to logical modules that may be combined with other modules or divided into sub-modules despite their physical organization or storage.

Computer system 1400 may implement the techniques described herein using customized hard-wired logic, one or more ASICs or FPGAs, firmware and/or program logic which in combination with the computer system causes or programs computer system 1400 to be a special-purpose machine. According to one embodiment, the techniques herein are performed by computer system 1400 in response to processor(s) 1404 executing one or more sequences of one or more instructions contained in main memory 1406. Such instructions may be read into main memory 1406 from another storage medium, such as storage device 1410. Execution of the sequences of instructions contained in main memory 1406 causes processor(s) 1404 to perform the process steps described herein. In alternative embodiments, hard-wired circuitry may be used in place of or in combination with software instructions.

The term "non-transitory media," and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 1410. Volatile media includes dynamic memory, such as main memory 1406. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

Non-transitory media is distinct from but may be used in conjunction with transmission media. Transmission media participates in transferring information between non-transitory media. For example, transmission media includes coaxial cables, copper wire and fiber optics, including the wires that comprise bus 1402. Transmission media can also take the form of acoustic or light waves, such as those generated during radio-wave and infra-red data communications.

Various forms of media may be involved in carrying one or more sequences of one or more instructions to processor 1404 for execution. For example, the instructions may initially be carried on a magnetic disk or solid state drive of a remote computer. The remote computer can load the instructions into its dynamic memory and send the instructions over a telephone line using a modem. A modem local to computer system 1400 can receive the data on the telephone line and use an infra-red transmitter to convert the data to an infra-red signal. An infra-red detector can receive the data carried in the infra-red signal and appropriate circuitry can place the data on bus 1402. Bus 1402 carries the data to main memory 1406, from which processor 1404 retrieves and executes the instructions. The instructions received by main memory 1406 may retrieve and execute the instructions. The instructions received by main memory 1406 may optionally be stored on storage device 1410 either before or after execution by processor 1404.

Computer system 1400 also includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card, cable modem, satellite modem, or a modem to provide a data communication connection to a corresponding type of telephone line. As another example, communication interface 1418 may be a local area network (LAN) card to provide a data communication connection to a compatible LAN (or WAN component to communicated with a WAN). Wireless links may also be implemented. In any such implementation, communication interface 1418 sends and receives electrical, electromagnetic or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1426. ISP 1426 in turn provides data communication services through the world wide packet data communication network now commonly referred to as the "Internet" 1428. Local network 1422 and Internet 1428 both use electrical, electromagnetic or optical signals that carry digital data streams. The signals through the various networks and the signals on network link 1420 and through communication interface 1418, which carry the digital data to and from computer system 1400, are example forms of transmission media.

Computer system 1400 can send messages and receive data, including program code, through the network(s), network link 1420 and communication interface 1418. In the Internet example, a server 1430 might transmit a requested code for an application program through Internet 1428, ISP 1426, local network 1422 and communication interface 1418.

The received code may be executed by processor 1404 as it is received, and/or stored in storage device 1410, or other non-volatile storage for later execution.

VII. **Terminology**

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments. In addition, the inventions illustratively disclosed herein suitably may be practiced in the absence of any element which is not specifically disclosed herein.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

**Claims**

1.    A computer system for detecting outliers in a large plurality of transaction data, the computing system comprising:

   a network interface coupled to a data network for receiving one or more packet flows comprising the transaction data;
   a computer processor; and
   a transitory or non-transitory computer readable storage medium storing program instructions for execution by the computer processor in order to cause the computing system to
   receive first features in the transaction data for a subject entity,
   receive second features in the transaction data for a benchmark sets for one or more benchmark entities,
   determine an outlier value of the entity based on a Mahalanobis distance from the first features to a benchmark value representing a centroid for at least some of the second features.

2.    The computer system of claim 1, wherein the benchmark set comprises a predefined number of entities, from a population, most similar to the subject entity over a time period.

3.    The computer system of claim 2, wherein the predefined number of entities represent the predefined number of entities from the population having low Mahalanobis distances to the subject entity.

4.    The computer system of any of claims 1-3, wherein the benchmark set comprises a predetermined cohort of entities, from a population of entities.

5.    The computer system of any of claims 1-4, wherein the benchmark entity of the benchmark set is the same as the subject entity and the first features correspond to a first time and the second features correspond to a second time distinct from the first time.

6.    The computer system of claim 5, wherein the second time represents a predefined number of time periods from a third time.

7.    The computer system of claim 6, wherein the second time represents the predefined number of time periods from the third time having low Mahalanobis distances to the subject entity.

FIG. 1

*FIG. 2*

KEY

O OVERALL POPULATION

X COHORT POPULATION

*FIG. 3*

FIG. 4A

FIG. 4B

*FIG. 4C*

*FIG. 4D*

FIG. 5A

FIG. 5B

*FIG. 5C*

*FIG. 5D*

FIG. 6A

FIG. 6B

*FIG. 6C*

*FIG. 6D*

*FIG. 7*

Sequential convex hulls with a Normal distribution

Sequential convex hulls with a Cauchy distribution

Sequential convex hulls with a Uniform distribution

Sequential convex hulls with a Log-Cauchy distribution

FIG. 8

EP 3 038 046 A1

Hamming distance using the median with a Normal distribution

Hamming distance using the median with a Uniform distribution

Hamming distance using the median with a Log-Cauchy distribution

Hamming distance using the median with a Cauchy distribution

*FIG. 9*

Coverage of k-NN boxes with a Normal distribution

Coverage of k-NN boxes with a Cauchy distribution

Coverage of k-NN boxes with a Uniform distribution

Coverage of k-NN boxes with a Log-Cauchy distribution

*FIG. 10*

| APR 1 | MAY 1 | JUN 1 | JUL 1 | AUG 1 | SEP 1 | OCT 1 | NOV 1 | DEC 1 |

Jacky Smith's Team
52 People

**3.6**
RISK SCORE

**141K**
TRADES

HIDE REPORT

Overview

Active Alerts

| ▼ DoA Breach | | 5 Trades |
|---|---|---|
| John Smith | John Smith violated quantity limit | Action ▾ |
| 01/02/2014 | View Alert \| View Chart \| View Communications | |
| Mary Johnson | Mary Johnson violated product grade mandate | Action ▾ |
| 01/02/2014 | View Alert \| View Chart \| View Communications | |
| Mary Johnson | Mary Johnson violated quantity limit | Action ▾ |
| 01/02/2014 | View Alert \| View Chart \| View Communications | |
| Mary Johnson | Mary Johnson violated quantity limit | Action ▾ |
| 01/02/2014 | View Alert \| View Chart \| View Communications | |
| Ronald Joseph | Ronald Joseph violated product grade mandate | Action ▾ |
| 01/02/2014 | View Alert \| View Chart \| View Communications | |
| ▶ Block Leave Violation | | |
| ▶ Potential Data Exfiltration | | |

## FIG. 11

| RAW DATA |
|---|

| DATA INTEGRATED PIPELINE |
|---|

| COMPUTATION | KEY RISK INDICATOR | EXPECTATIONS TABLE |
|---|---|---|

| COHORT-REGULARIZED SEMI-SUPERVISED LEARNING | | REFINEMENT |
|---|---|---|
| **ONLINE OUTLIER DETECTION:** Cluster-level and global dissimilarity to each cluster, baselines (cohort and individual history), tags of nearby examples, contextual indicators. | ← | **UPDATE** using analyst feedback to outlier detector and risk scorer |
| TRIAGE AND INVESTIGATION | | |
| **PRESENT RESULTS TO ANALYST:** Ranked feed and tag suggestions.<br>**COLLECT ANALYST FEEDBACK:** Explicit classification and escalation, tagging, implicit feedback (clinks/navigation). | → | **INDEX NEW TAGS** for similarity based retrieval |

| SUMMARIZATION AND EVALUATION |
|---|

## FIG. 12

MONITOR

## FIG. 13

FIG. 14

EP 3 038 046 A1

**EUROPEAN SEARCH REPORT**

Europäisches Patentamt
European Patent Office
Office européen des brevets

Application Number

EP 15 20 2090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Quartetfs: "Managing Business Performance and Detecting Outliers in Financial Services", , 16 October 2014 (2014-10-16), XP055270143, Retrieved from the Internet: URL:https://quartetfs.com/images/pdf/white-papers/Quartet_FS_White_Paper_-_ActivePivot_Sentinel.pdf [retrieved on 2016-05-03] * the whole document * | 1-7 | INV. G06Q40/04 |
| L | Quartetfs: "Resource Center", , 16 October 2014 (2014-10-16), XP055270142, Retrieved from the Internet: URL:https://web.archive.org/web/20141016044306/http://quartetfs.com/resource-center/white-papers [retrieved on 2016-05-03] * page 1 * * Wayback machine entry for dating XP055270143 * | | |
| Y | VICTORIA HODGE ET AL: "A Survey of Outlier Detection Methodologies", ARTIFICIAL INTELLIGENCE REVIEW, vol. 22, no. 2, 1 October 2004 (2004-10-01), pages 85-126, XP055176642, ISSN: 0269-2821, DOI: 10.1023/B:AIRE.0000045502.10941.a9 * Abstract Sections 1 and 2 * | 1-7 | |

TECHNICAL FIELDS SEARCHED (IPC)

G06Q
G01N

-/--

The present search report has been drawn up for all claims

| Place of search | Date of completion of the search | Examiner |
|---|---|---|
| Munich | 4 May 2016 | Bertolissi, Edy |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Safal V Bhosale Cse: "Holy Grail of Outlier Detection Technique: A Macro Level Take on the State of the Art", International Journal of Computer Science & Information Technology, 1 August 2014 (2014-08-01), XP055270219, Retrieved from the Internet: URL:http://www.ijcsit.com/docs/Volume 5/vol5issue04/ijcsit20140504226.pdf [retrieved on 2016-05-03] * the whole document * | 1-7 | |
| A | KOOSHA GOLMOHAMMADI ET AL: "Data Mining Applications for Fraud Detection in Securities Market", INTELLIGENCE AND SECURITY INFORMATICS CONFERENCE (EISIC), 2012 EUROPEAN, IEEE, 22 August 2012 (2012-08-22), pages 107-114, XP032236160, DOI: 10.1109/EISIC.2012.51 ISBN: 978-1-4673-2358-1 * abstract * * Sections I and III * | 1-7 | |
| A | US 2003/154044 A1 (LUNDSTEDT ALAN P [US] ET AL) 14 August 2003 (2003-08-14) * paragraph [0042] * | 1-7 | |

TECHNICAL FIELDS
SEARCHED (IPC)

The present search report has been drawn up for all claims

| Place of search | Date of completion of the search | Examiner |
|---|---|---|
| Munich | 4 May 2016 | Bertolissi, Edy |

EPO FORM 1503 03.82 (P04C01)

## ANNEX TO THE EUROPEAN SEARCH REPORT
## ON EUROPEAN PATENT APPLICATION NO.

EP 15 20 2090

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2016

| Patent document cited in search report | Publication date | Patent family member(s) | Publication date |
|---|---|---|---|
| US 2003154044 A1 | 14-08-2003 | AR 036238 A1 | 25-08-2004 |
| | | AU 2002318275 B2 | 26-03-2009 |
| | | BR 0211369 A | 23-05-2006 |
| | | EP 1525534 A2 | 27-04-2005 |
| | | MY 140632 A | 15-01-2010 |
| | | US 2003135547 A1 | 17-07-2003 |
| | | US 2003154044 A1 | 14-08-2003 |
| | | US 2007143037 A1 | 21-06-2007 |
| | | US 2011054864 A1 | 03-03-2011 |
| | | WO 03010624 A2 | 06-02-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62096244 A
- US 46361514 A
- US 57975214 A

**Non-patent literature cited in the description**

- **BREUNIG et al.** LOF: identifying density-based local outliers. *ACM Sigmod Record,* 2000, vol. 29 (2), 93-104